# EUROPEAN PATENT SPECIFICATION

(11) **EP 3 669 069 B1**
(45) Date of publication and mention of the grant of the patent: **09.12.2020**
(21) Application number: 18752759.3
(22) Date of filing: 09.08.2018
(51) Int. Cl.: F03B 3/12, F03B 11/04, F03B 3/02, F03B 11/00

(54) **HYDRAULIC MACHINE COMPRISING A RADIAL FLOW RUNNER**
HYDRAULISCHE MASCHINE MIT RADIALFLUSSLÄUFER
MACHINE HYDRAULIQUE COMPRENANT UNE ROUE À ÉCOULEMENT RADIAL

(30) Priority: 14.08.2017 US 201762545135 P; 02.08.2018 US 201862713650 P
(43) Date of publication of application: 24.06.2020
(73) Proprietor: Voith Patent GmbH, 89522 Heidenheim (DE)
(72) Inventor: COULSON, Stuart, Seven Valleys, PA 17360 (US); HARMER, Brandon, York, PA 17402 (US); ZOLL, Jesse, Mountville, PA 17554 (US)
(86) International application number: PCT/EP2018/071616
(87) International publication number: WO 2019/034521

(56) References cited:
- JP-A- S5 920 572
- JP-A- 2002 235 652
- JP-A- 2007 154 667
- JP-A- 2011 137 407
- US-A- 5 823 740

## Description

The present invention relates generally to hydroelectric turbine or pump installations comprising a radial flow runner of the Francis type.

The objective of the present invention is to improve the known hydraulic machine concerning efficiency, vibration and noise behavior in the partial load regime.

JP 2007 154667 A and JP S59 20572 A are disclosing runners of Francis type comprising a passage connecting two sides of the crown, i.e. the passage is not located within the blade. US 5 823 740 A discloses a Francis turbine with passages integrally formed within the blade, which are for a flow of gas. JP 2011 137407 A and JP 2002 235652 A are disclosing runners of Francis type comprising passages in the blades, which do not link an inlet in communication with the high pressure side and an outlet in the low pressure side between the band and the lower cover.

It is known, that by adding air to the water flowing through the runner of the radial flow type, the efficiency in the partial load regime can be materially enhanced (see e.g. US 1,823,624 to Nagler). In practice, it turns out that for adding air a compressor is needed. The compressor consumes power and partially or completely negates the benefit of reducing friction losses. The objective of the present invention is to disclose a layout of a hydraulic machine where no compressor or at least a compressor consuming less power compared to the state of the art is needed for air admission.

This objective is achieved by a hydraulic machine according to claim 1. Other favorable implementations of the invention are disclosed in the depended claims.

The inventors have recognized that this objective can be achieved by a runner comprising at least one passage leading from the runner crown to the runner band whereas the passage is located within one of the runner blades and an air admission opening positioned in the head cover above the runner.

The invention will hereinafter be described in conjunction with the appended drawings:
Fig. 1 is a cross-sectional view of a portion of a Francis turbine according to the present invention;
Fig. 2 shows section A according to a first embodiment of a runner blade according to Figure 1;
Fig. 3 shows section A according to another embodiment of a runner blade according to Figure 1.

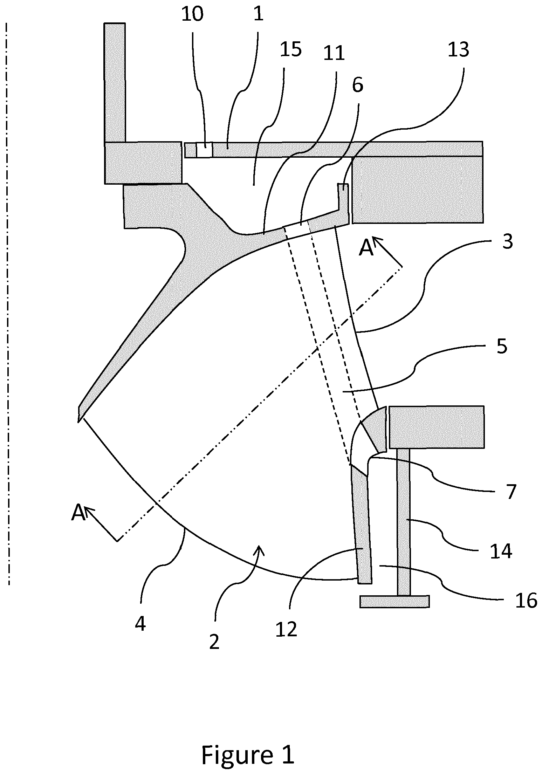

Figure 1 displays schematically a cross-sectional view of a hydraulic machine comprising a Francis type runner according to the present invention. The head cover is designated as 1 and the lower cover as 14. The head cover 1 comprises an air inlet, which is designated by 10. The runner comprises a runner crown, which is designated as 11. Between the head cover 1 and the runner crown 11 a chamber is located, which is designated by 15. The air inlet 10 connects the chamber 15 above the runner crown 11 to the area above the head cover 1, which is exposed to atmospheric air.

A runner blade 2 extends between the crown 11 and the band designated as 12. The blade 2 has two edges designated by 3 and 4. The fluid entering the runner flows from edge 3 towards edge 4, whereas the high pressure side adjoins to edge 3 and the low pressure side adjoins to edge 4. It is clear that in pumping mode the flow direction of the fluid is reversed. The runner crown 11 comprises circumferential located sealing means designated as 13. Sealing means 13 are construed to seal the space between head cover 1 and crown 11 against high pressure water. However due to the imperfection of the sealing a amount of high pressure water will be present in the space above the runner crown 11. The runner crown 11 comprises an inlet aperture designated by 6. The inlet aperture 6 is located in a portion of the crown, which is exposed to high pressure water passing the sealing means 13. The blade 2 comprises a passage designated by 5. The passage 5 leads from inlet aperture 6 to the band 12 where the passage 5 forms an opening which is designated by 7. The high pressure in the chamber 15 above the runner crown 11 leads to draining the leakage water from the space above crown 11 directly through the passage 5 inside blade 2 and the opening 7 to a chamber which is located between the band 12 and the lower cover 14, which is designated by 16. This chamber 16 is connected to the low pressure side of the runner. The dash-dotted line on the left side of figure 1 indicates the axis of rotation of the runner.

Since opening 7 is ideally located at an equal or even slightly larger radial distance from the axis of rotation than the inlet aperture 6 backpressure is avoided due to the radial pumping effect of rotation.

For a similar reason the pressure distribution within the chamber 15 above the runner crown 11 is not uniform. The pressure is highest at the region of the highest distance and is lowest at the region of the smallest distance from the axis of rotation. Therefore, it is favorable, that the air inlet 10 is positioned in the head cover 1 at the smallest distance possible from the axis of rotation but outside the flange of the shaft that connects to the runner crown 11. At least the air inlet 10 is located at a diameter smaller than the locating diameter of the inlet aperture 6.

During operation of the hydraulic machine, air is sucked in through the air inlet 10 into the chamber 15 above the runner crown 11 or has to be pumped in by a compressor with little effort. This air partially fills the chamber 15 above the runner crown 11 forming an air cushion. From there air is transported by the water flow through the at least one passage 5 to the chamber 16 between band 12 and lower cover 14 forming an air cushion. Thus, air surrounds the periphery of the runner before flowing out into the water in the main flow passage exiting the hydraulic machine. As a result, friction losses, vibration and noise are reduced increasing the efficiency of the hydraulic machine.

By admitting the air at into the chamber 15 above the runner crown 11 above the rotating runner it will naturally accumulate, disperse and fill the chamber 15 until it reaches the passage 5 through the runner blade 2 where it will flow into the peripheral chamber 16. It enters the peripheral chamber 16 through the passage 5 in the rotation runner blade in an area where the flow velocity in the chamber is mainly in the peripheral direction, so it can also accumulate and provide good coverage of the outer surface of the rotating runner without necessitating a large mass-flow of air. Since the outer wall of the peripheral chamber 16 is at higher pressure, the air will be more concentrated close to the runner periphery where it is most beneficial for drag reduction.

Since many modernization projects of hydraulic machines involve the replacement of the turbine runner, the invention also has the advantage that it can be easily retrofitted to existing machines. The new runner would be provided with hollow blade passages according to the invention and the air inlet could easily be added to the head cover above the runner.

To further facilitate the airflow, the following modifications of the present invention may be applied (alone or in combination):
- Increased number of air inlets 10.
- Increased number of passages 5, meaning that more than one blade 2 incorporates a passage 5 whereas in extreme each blade 2 can comprise a passage 5.
- In order to reduce pressure at the exit of the passage 5, a flow deflector may be positioned just upstream of the opening 7 on the outer surface of the band (12).
- In order to reduce pressure at the exit of the passage 5, the downstream edge of the opening 7 within the band could be profiled.

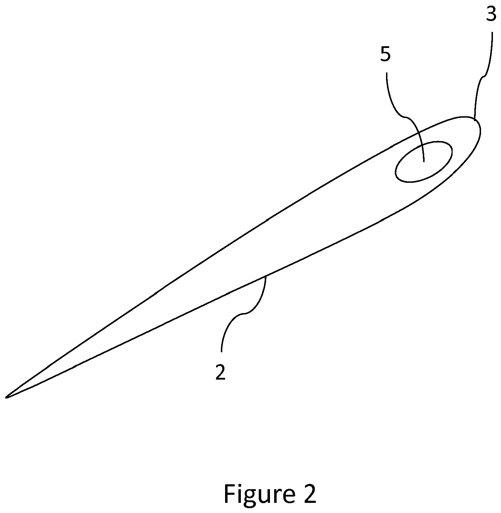

Figure 2 displays schematically a cross-sectional view through the blade 2 of figure 1 along the marked section A. The passage 5 is located near edge 3 adjoining the high pressure side of blade 2. This part of the blade 2 is typically relatively thick and straight. Normally the blade 2 is machined from a casting. The passage 5 according to the embodiment of figure 2 is formed directly while casting the blade 2 which is thus of single piece construction.

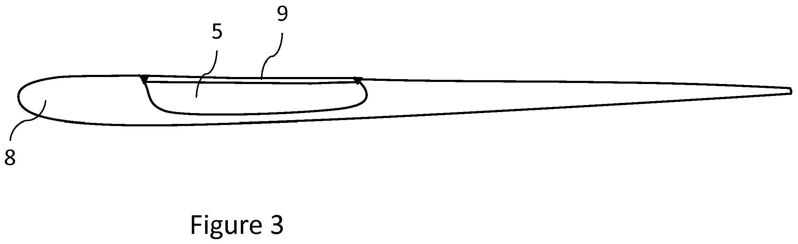

Figure 3 displays schematically a cross-sectional view through the blade 2 of figure 1 along the marked section A according to another embodiment of the present invention. In the view along section A it can be seen that the blade 2 comprises a base part which is designated by 8 and a cover part which is designated by 9. The base part 8 includes either the entire suction side or pressure side surface of the blade, as well as the entire surface of the edge adjoining the high pressure side and the entire surface of the edge adjoining the low pressure side. A cavity is machined or cast into the base part 8. The thinner cover part 9 is attached to the base part 8 thus forming the passage 5. The cover part 9 may be metal or composite material, may be cast formed or machined and may be attached by welding or by a bonding material (epoxy, glue, etc.).

The blade could also be produced with a cavity directly by rapid prototyping methods such as additive manufacturing.

## Claims

1. A hydraulic machine comprising a runner of Francis type, a head cover (1) and a lower cover (14), whereas the runner comprises a low and a high pressure side, a crown (11), a band (12), a chamber (15) between head cover (1) and crown (11), a chamber (16) between lower cover (14) and band (12), a plurality of blades (2), each blade (2) being defined by a pressure surface, an oppositely facing suction surface, an edge (3) adjoining the high pressure side and a spaced apart edge (4) adjoining the low pressure side of the runner, whereas the crown comprises sealing means (13) to seal the chamber (15) between the crown (11) and head cover (1) against water from the high pressure side, whereas the runner comprises at least one passage (5) being capable to drain high pressure leakage water passing the sealing means (13) to the low pressure side, and the passage (5) comprises an inlet aperture (6) located in a portion of the crown (11) which during operation is exposed to high pressure leakage water, whereas the head cover (1) comprises an air inlet (10) connecting the area above the head cover (1) with the chamber (15) between head cover (1) and crown (11), **characterized in that** the passage (5) is located within one of the blades (2) and leads from the inlet aperture (6) to the band (12), where the passage (5) forms an opening (7) leading to the chamber (16) between the band (12) and the lower cover (14), which chamber (16) is in connection with the low pressure side of the runner.

2. The hydraulic machine of claim 1, wherein the air inlet (10) within the head cover (1) is located at a diameter smaller than the locating diameter of the inlet aperture (6).

3. The hydraulic machine of claim 1 or 2, wherein the blade (2), in which the passage (5) is located, is of single piece construction and is machined from a casting including the passage (5).

4. The hydraulic machine of claim 1 or 2, wherein the blade (2), in which the passage (5) is located, comprises a base part (8) and a cover part (9) where the base part (8) is of single piece construction including the entire edge (3) adjoining the high pressure side, the entire pressure side of the blade (2), as well as the entire surface of the edge (4) adjoining the low pressure side, and where the base part (8) contains a cavity and the cover part (9) is attached to the base part (8) above the cavity to form the passage (5).

5. The hydraulic machine of claim 1 or 2, wherein the blade (2), in which the passage (5) is located, comprises a base part (8) and a cover part (9) where the base part (8) is of single piece construction including the entire edge (3) adjoining the high pressure side, the entire suction side of the blade (2), as well as the entire surface of the edge (4) adjoining the low pressure side, and where the base part (8) contains a cavity and the cover part (9) is attached to the base part (8) above the cavity to form the passage (5).

6. The hydraulic machine of claim 1 or 2, wherein the blade (2), in which the passage (5) is located, is of single piece construction and is produced by a rapid prototyping method such as additive manufacturing.

7. The hydraulic machine of one of the proceeding claims, wherein each blade (2) comprises a passage (5).

8. The hydraulic machine of one of the proceeding claims, wherein opening (7) is located at an equal or even larger radial distance from the axis of rotation than the inlet aperture (6).

9. The hydraulic machine of one of the proceeding claims, wherein a flow deflector is positioned upstream of the opening (7) on the outer surface of the band (12).

## Patentansprüche

1. Hydraulische Maschine mit einem Laufrad vom Francis-Typ, einer Kopfabdeckung (1) und einer unteren Abdeckung (14), wobei das Laufrad eine Nieder- und eine Hochdruckseite, einen Kranz (11), ein Band (12), eine Kammer (15) zwischen Kopfabdeckung (1) und Kranz (11), eine Kammer (16) zwischen unterer Abdeckung (14) und Band (12), eine Mehrzahl von Schaufeln (2) aufweist, wobei jede Schaufel (2) durch eine Druckfläche, eine entgegengesetzt ausgerichtete Saugfläche, eine an die Hochdruckseite angrenzende Kante (3) und eine beabstandete Kante (4), die an die Niederdruckseite des Laufrads angrenzt, definiert ist, wobei der Kranz eine Dichtungseinrichtung (13) zum Abdichten der Kammer (15) zwischen dem Kranz (11) und der Kopfabdeckung (1) gegen Wasser von der Hochdruckseite aufweist, wobei das Laufrad mindestens einen Durchgang (5) aufweist, der in der Lage ist, Hochdruckleckwasser, das die Dichtungseinrichtung (13) passiert, zur Niederdruckseite abzuleiten, und der Durchgang (5) ein Einlassloch (6) aufweist, das sich in einem Abschnitt des Kranzes (11) befindet, der während des Betriebs Hochdruckleckwasser ausgesetzt ist, wobei die Kopfabdeckung (1) einen Lufteinlass (10) aufweist, der den Bereich über der Kopfabdeckung (1) mit der Kammer (15) zwischen der Kopfabdeckung (1) und dem Kranz (11) verbindet, **dadurch gekennzeichnet, dass** der Durchgang (5) innerhalb einer der Schaufeln (2) angeordnet ist und von dem Einlassloch (6) zu dem Band (12) führt, wobei der Durchgang (5) eine Öffnung (7) bildet, die zu der Kammer (16) zwischen dem Band (12) und der unteren Abdeckung (14) führt, wobei die Kammer (16) mit der Niederdruckseite des Laufrads in Verbindung steht.

2. Hydraulische Maschine nach Anspruch 1, wobei der Lufteinlass (10) innerhalb der Kopfabdeckung (1) bei einem Durchmesser angeordnet ist, der kleiner ist als der Anordnungsdurchmesser des Einlasslochs (6).

3. Hydraulische Maschine nach Anspruch 1 oder 2, wobei die Schaufel (2), in der sich der Durchgang (5) befindet, eine einstückige Konstruktion ist und einschließlich des Durchganges (5) aus einem Gussteil gespant ist.

4. Hydraulische Maschine nach Anspruch 1 oder 2, wobei die Schaufel (2), in der sich der Durchgang (5) befindet, einen Basisteil (8) und einen Abdeckungsteil (9) umfasst, wobei der Basisteil (8) eine einstückige Konstruktion ist, die die gesamte Kante (3), die an die Hochdruckseite angrenzt, die gesamte Druckseite der Schaufel (2) sowie die gesamte Fläche der an die Niederdruckseite angrenzenden Kante (4) umfasst, und wobei der Basisteil (8) einen Hohlraum umfasst und der Abdeckungsteil (9) an dem Basisteil (8) über dem Hohlraum befestigt ist, um den Durchgang (5) zu bilden.

5. Hydraulische Maschine nach Anspruch 1 oder 2, wobei die Schaufel (2), in der sich der Durchgang (5) befindet, einen Basisteil (8) und einen Abdeckungsteil (9) umfasst, wobei der Basisteil (8) eine einstückige Konstruktion ist, die die gesamte Kante (3), die an die Hochdruckseite angrenzt, die gesamte Saugseite der Schaufel (2) sowie die gesamte Fläche der an die Niederdruckseite angrenzenden Kante (4) umfasst, und wobei der Basisteil (8) einen Hohlraum enthält und der Abdeckungsteil (9) an dem Basisteil (8) über des Hohlraums befestigt ist, um den Durchgang (5) zu bilden.

6. Hydraulische Maschine nach Anspruch 1 oder 2, wobei die Schaufel (2), in der sich der Durchgang (5) befindet, eine einstückige Konstruktion ist und durch ein Rapid-Prototyping-Verfahren, wie z.B. Additive Fertigung, hergestellt wird.

7. Hydraulische Maschine nach einem der vorhergehenden Ansprüche, wobei jede Schaufel (2) einen Durchgang (5) umfasst.

8. Hydraulische Maschine nach einem der vorhergehenden Ansprüche, wobei die Öffnung (7) in einem gleichen oder sogar größeren radialen Abstand von der Rotationsachse angeordnet ist als das Einlassloch (6).

9. Hydraulische Maschine nach einem der vorhergehenden Ansprüche, wobei eine Strömungsablenkeinrichtung stromaufwärts der Öffnung (7) an der Außenfläche des Bandes (12) angeordnet ist.

## Revendications

1. Machine hydraulique comprenant une roue du type Francis, un couvercle de tête (1) et un couvercle inférieur (14), la roue comprenant un côté basse pression et un côté haute pression, une couronne (11), une bande (12), une chambre (15) entre le couvercle de tête (1) et la couronne (11), une chambre (16) entre le couvercle inférieur (14) et la bande (12), une pluralité d'aubes (2), chaque aube (2) étant définie par une surface de pression, une surface d'aspiration faisant face à l'opposé, un bord (3) adjacent au côté haute pression et un bord espacé (4) adjacent au côté basse pression de la roue, la couronne comprenant un moyen d'étanchéité (13) pour rendre étanche la chambre (15) entre la couronne (11) et le couvercle de tête (1) contre l'eau provenant du côté haute pression, la roue comprenant au moins un passage (5) pouvant évacuer l'eau de fuite haute pression passant le moyen d'étanchéité (13) vers le côté basse pression, et le passage (5) comprenant une ouverture d'entrée (6) située dans une partie de la couronne (11) qui, pendant le fonctionnement, est exposée à l'eau de fuite haute pression, le couvercle de tête (1) comprenant une entrée d'air (10) reliant la zone au-dessus du couvercle de tête (1) avec la chambre (15) entre le couvercle de tête (1) et la couronne (11), **caractérisée en ce que** le passage (5) est situé à l'intérieur de l'une des aubes (2) et mène de l'ouverture d'entrée (6) à la bande (12), le passage (5) formant une ouverture (7) menant à la chambre (16) entre la bande (12) et le couvercle inférieur (14), ladite chambre (16) étant en relation avec le côté basse pression de la roue.

2. Machine hydraulique selon la revendication 1, l'entrée d'air (10) à l'intérieur du couvercle de tête (1) étant située au niveau d'un diamètre inférieur au diamètre de localisation de l'ouverture d'entrée (6).

3. Machine hydraulique selon la revendication 1 ou 2, l'aube (2), dans laquelle le passage (5) est situé, étant de construction monobloc et étant usinée à partir d'une pièce moulée comprenant le passage (5).

4. Machine hydraulique selon la revendication 1 ou 2, l'aube (2), dans laquelle le passage (5) est situé, comprenant une partie de base (8) et une partie de couvercle (9), la partie de base (8) étant de construction monobloc comprenant tout le bord (3) adjacent au côté haute pression, tout le côté pression de l'aube (2), ainsi que toute la surface du bord (4) adjacent au côté basse pression, et la partie de base (8) contenant une cavité et la partie de couvercle (9) étant fixée à la partie de base (8) au-dessus de la cavité pour former le passage (5).

5. Machine hydraulique selon la revendication 1 ou 2, l'aube (2), dans laquelle le passage (5) est situé, comprenant une partie de base (8) et une partie de couvercle (9), la partie de base (8) étant de construction monobloc comprenant tout le bord (3) adjacent au côté haute pression, tout le côté aspiration de l'aube (2), ainsi que toute la surface du bord (4) adjacent au côté basse pression, et la partie de base (8) contenant une cavité et la partie de couvercle (9) étant fixée à la partie de base (8) au-dessus de la cavité pour former le passage (5).

6. Machine hydraulique selon la revendication 1 ou 2, l'aube (2), dans laquelle le passage (5) est situé, étant de construction monobloc et étant produite par un procédé de prototypage rapide tel que la fabrication additive.

7. Machine hydraulique selon l'une des revendications précédentes, chaque aube (2) comprenant un passage (5).

8. Machine hydraulique selon l'une des revendications précédentes, l'ouverture (7) étant située à une distance radiale égale ou même plus grande de l'axe de rotation que l'ouverture d'entrée (6).

9. Machine hydraulique selon l'une des revendications précédentes, un déflecteur de flux étant positionné en amont de l'ouverture (7) sur la surface extérieure de la bande (12).
